# FASCICULE DE BREVET EUROPEEN

(11) **EP 1 319 756 B1**
(45) Date de publication et mention de la délivrance du brevet: **23.07.2008**
(21) Numéro de dépôt: 02293066.3
(22) Date de dépôt: 11.12.2002
(51) Int. Cl.: E01F 9/04, B29C 39/12

(54) **Procédé de fabrication d'un dispositif de signalisation au sol et plateau de moulage utilisé dans la mise en oeuvre de ce procédé**
Verfahren, sowie dabei benötigte Formplatte zur Herstellung einer Strassenmarkierungsvorrichtung
Process and moulding plate used thereby, for manufacturing a road marking device

(30) Priorité: 17.12.2001 FR 0116298
(43) Date de publication de la demande: 18.06.2003
(73) Titulaire: Alliance Petroleum Marquage, 94140 Alfortville (FR)
(72) Inventeur: Schang, Thierry, 93140 Bondy (FR); Lopes de Sousa, Jean, 91590 d'Huisson Longueville (FR); Lavernhe, Jean-Marie, 75017 Paris (FR)
(74) Mandataire: Catherine, Alain

(56) Documents cités:
- DE-U- 8 913 272
- FR-A- 2 787 128

## Description

La présente invention concerne un procédé de fabrication d'un dispositif de signalisation au sol, notamment pour déficients visuels, comprenant un élément plat dont la face inférieure est destinée à être fixée sur le sol et dont la face supérieure est pourvue de plots de signalisation, tel que connue du FR-A-2 787 128 dont le préambule est dérivé.

La fabrication de ces dispositifs de signalisation nécessite actuellement la réalisation d'opérations longues et complexes, ce qui la rend particulièrement coûteuse.

La présente invention se propose de remédier à ces inconvénients et, pour ce faire, elle a pour objet un procédé de fabrication qui est caractérisé en ce qu'il comprend les étapes consistant à :
- réaliser dans l'élément plat des orifices dont la répartition correspond à celle des plots mais dont les dimensions sont inférieures à celles de la surface de ces derniers qui surplombe l'élément plat ;
- appliquer la face supérieure de l'élément plat contre un plateau de moulage horizontal comportant des cavités dont la répartition, les dimensions et la configuration correspondent à celles des plots ;
- introduire à travers les orifices, dans les cavités du plateau de moulage, une quantité de pâte suffisante pour remplir lesdites cavités ainsi que les orifices correspondants de l'élément plat, cette pâte étant apte à durcir en présence d'air.

Ce procédé comprend des étapes peu nombreuses et faciles à réaliser de sorte que le prix de revient des dispositifs de signalisation obtenus par sa mise en oeuvre peut maintenant être nettement plus faible que celui des dispositifs actuellement sur le marché.

Selon l'invention, il est préférable d'appliquer un film amovible sur la face inférieure de l'élément plat et de réaliser des orifices dans le film amovible, en même temps que les orifices réalisés dans l'élément plat.

Ce film est prévu pour protéger la face inférieure de l'élément plat. Les personnes chargées de la mise en place du dispositif de signalisation au sol, par exemple sur une chaussée, un quai de gare ou de métro, etc., doivent donc l'enlever avant d'effectuer leur mission.

On précisera à toutes fins utiles que les orifices sont réalisés dans le film amovible pour permettre l'introduction de la pâte dans les cavités du plateau de moulage, leur réalisation et celle des orifices ménagés dans l'élément plat étant de préférence exécutées simultanément pour simplifier les opérations de perçage et réduire au maximum les pertes de temps.

Selon un mode de mise en oeuvre particulier, les orifices ont une surface approximativement égale à la moitié de la surface des plots qui surplombe l'élément plat.

La zone de contact entre la pâte et l'élément plat est importante dans ce mode de mise en oeuvre, ce qui permet une liaison très solide entre l'élément plat et les plots et évite par conséquent tout risque d'arrachement de ces derniers.

Selon le mode de mise en oeuvre ci-dessus, les orifices réalisés dans l'élément plat et dans le film protecteur, lorsque celui-ci est présent, ont de préférence une forme générale de losange.

Par ailleurs, les plots ont de préférence une forme choisie dans le groupe comprenant les formes sphérique, pyramidale, conique, tronconique et cylindrique.

Afin de réaliser rapidement des plots particulièrement résistants, la pâte est de préférence une résine polymérisable en présence d'air.

En outre, pour permettre aux déficients visuels de mieux repérer le dispositif de signalisation, l'élément plat et les plots ont de préférence des couleurs différentes.

La présente invention a également pour objet un plateau de moulage permettant de mettre en oeuvre le procédé décrit ci-dessus.

De façon avantageuse, ce plateau comprend des trous borgnes dont la répartition correspond à celle des plots, chacun des trous borgnes recevant une bague dans laquelle est disposée une empreinte délimitant une cavité dont la forme et les dimensions correspondent à celles de la partie d'un plot faisant saillie sur l'élément plat.

On notera ici qu'il suffit d'utiliser des bagues adaptables dans les trous borgnes et conformées pour recevoir intérieurement des empreintes différentes pour pouvoir fabriquer, avec le même plateau de moulage, des dispositifs de signalisation au sol comportant des plots de forme et de taille différentes.

De préférence, les empreintes comportent une protubérance annulaire entourant l'entrée de leur cavité, cette protubérance faisant saillie sur la surface externe du plateau.

La pâte déversée dans les empreintes ne peut ainsi parvenir sur la face supérieure de l'élément plat, ce qui permet l'obtention d'une ligne de jonction parfaitement régulière entre les plots et l'élément plat.

Un mode d'exécution de la présente invention sera décrit ci-après à titre d'exemple nullement limitatif en référence aux dessins annexés dans lesquels :
- la figure 1 est une vue en perspective schématique d'un dispositif de signalisation réalisé par la mise en oeuvre du procédé de fabrication selon l'invention, ce dispositif étant en cours de pose sur le sol ;
- la figure 2 est une vue de dessus partielle et à échelle agrandie du dispositif visible sur la figure 1 ;
- la figure 3 est une vue en coupe selon la ligne III-III de la figure 2 ;
- les figures 4a à 4d sont des schémas destinés à illustrer les différentes étapes du procédé de fabrication selon l'invention;
- la figure 5 est une vue partielle et à échelle agrandie montrant une bague et une empreinte faisant partie d'un plateau de moulage et servant à réaliser un plot de forme sphérique ; et
- la figure 6 est une vue analogue à la figure 5 mais montrant une bague et une empreinte servant à réaliser un plot de forme conique.

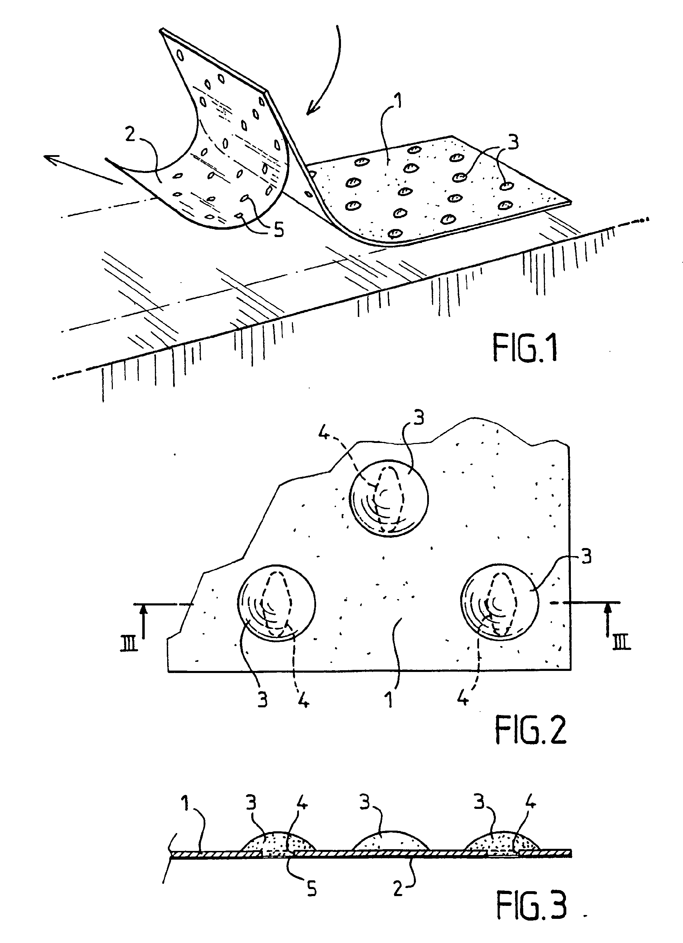

Le dispositif de signalisation au sol que l'on peut voir sur la figure 1 se présente sous la forme d'une bande. Il va de soi cependant qu'il pourrait avoir une forme quelconque et être constitué par exemple par une plaque rectangulaire ou carrée.

Ce dispositif comprend un élément plat 1, de préférence en matière plastique, dont la face inférieure est destinée à être fixée contre le sol après enlèvement d'un film amovible 2 et dont la face supérieure est pourvue de plots de signalisation 3 régulièrement répartis.

On précisera ici que le film amovible 2 est de préférence en matière plastique.

L'élément plat 1 comporte des orifices 4 dont la répartition correspond à celle des plots 3. les orifices 4 ont des dimensions inférieures à celles de la surface des plots qui surplombe l'élément plat, comme le montre clairement la figure 2. Leur forme générale est celle d'un losange mais pourrait être différente. Quant à leur surface, elle est approximativement égale à la moitié de celle de la surface des plots qui surplombe l'élément plat.

Des orifices 5 identiques aux orifices 4 sont réalisés dans le film amovible 2 et sont situés dans le prolongement des orifices 4 lorsque celui-ci est en place contre l'élément plat 1.

Dans l'exemple représenté sur les figures 1 à 3, les plots 3 sont de forme sphérique, mais rien ne s'oppose cependant à ce que leur forme soit différente. Ils pourraient donc avoir une forme pyramidale, conique, tronconique, cylindrique ou autre, sans que l'on sorte pour autant du cadre de la présente invention.

Afin de rendre le dispositif de signalisation plus visible, l'élément plat 1 et les plots 3 pourraient avoir des couleurs différentes.

On va maintenant décrire le procédé permettant de réaliser le dispositif de signalisation qui vient d'être décrit.

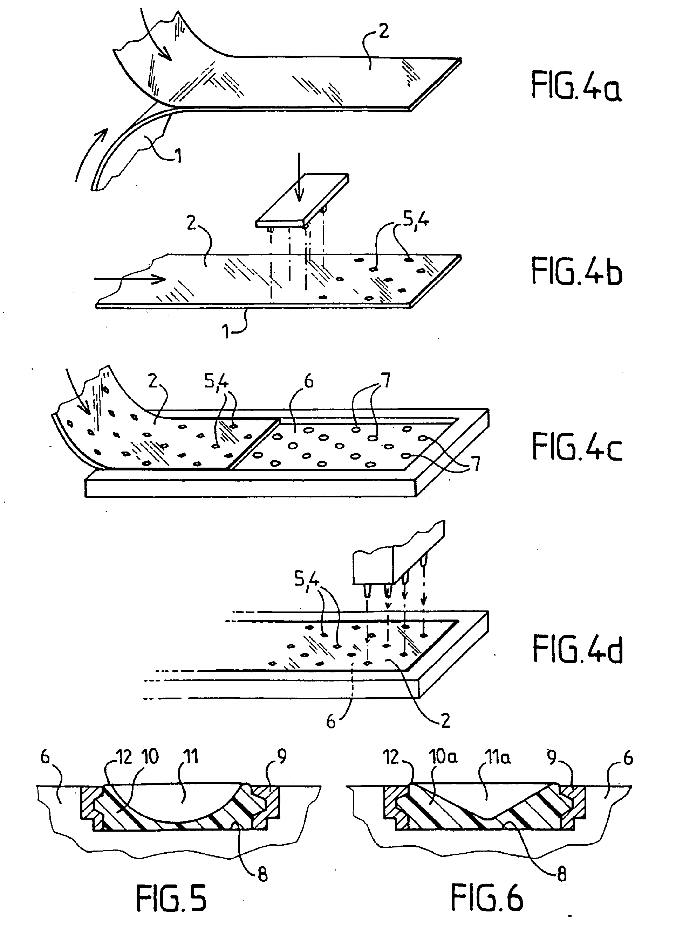

Tout d'abord, on fixe le film 2 sur la face inférieure de l'élément plat 1, comme représenté sur la figure 4a.

La fixation du film 2 est réalisée d'une manière connue en soi et ne sera donc pas décrite ici.

On réalise ensuite en une seule opération les orifices 5 et 4 respectivement dans le film 2 et l'élément plat 1 à l'aide d'un outillage conventionnel, comme représenté sur la figure 4b.

Après l'exécution des orifices 5 et 4, on applique la face supérieure de l'élément plat 1 contre un plateau de moulage horizontal 6 comportant des cavités 7 dont la répartition, les dimensions et la configuration correspondent à celles de la surface externe des plots 3.

Le plateau de moulage 6 est avantageusement pourvu de moyens appropriés permettant de positionner rapidement et correctement les orifices du film 2 et de l'élément plat 1 au dessus des cavités 7.

Dans l'exemple représenté sur la figure 4c, les moyens de positionnement sont constitués par un rebord faisant saillie sur trois côtés du plateau de moulage 6. Il va de soi cependant que les moyens de positionnement pourraient être différents.

Lorsque l'ensemble élément plat - film amovible est correctement en place sur le plateau 6, on introduit dans les cavités 7, à travers les orifices 5 et 4, une quantité prédéterminée d'une pâte destinée à constituer les plots 3, comme représenté sur la figure 4d.

Cette pâte, qui est de préférence une résine polymérisable en présence d'air, est introduite en une quantité suffisante pour remplir les cavités 7 et les orifices 4 de l'élément plat 1, comme représenté sur la figure 3.

Puis, lorsque la pâte a suffisamment durci, on enlève le dispositif de signalisation qui repose sur le plateau 6.

Le dispositif de signalisation ainsi réalisé est prêt à être posé. Pour ce faire, il suffit d'enlever le film amovible 2 et de coller la face inférieure de l'élément plat 1 contre le sol, à l'endroit approprié.

Le plateau de moulage 6, qui peut être utilisé pour fabriquer des dispositifs de signalisation différents, comprend des trous borgnes 8 dont la répartition correspond à celle des plots 3. Dans le mode de réalisation représenté sur la figure 5, chacun des trous borgnes 8 reçoit une bague 9 portant une empreinte 10 délimitant une cavité 11, laquelle correspond à une cavité 7.

Toutes les bagues 9 ont la même surface latérale extérieure.

En revanche, elles pourraient avoir une surface latérale intérieure différente et recevoir ainsi des empreintes 10 de tailles différentes.

Les empreintes 10 sont réalisées en une matière souple afin d'être facilement encliquetées dans les bagues 9 et délimitent une cavité sphérique 11 clairement visible sur la figure 5.

Dans le mode de réalisation représenté sur la figure 6, les trous borgnes 8 du plateau reçoivent chacun une bague 9 dans laquelle est encliquetée une empreinte 10a délimitant une cavité 11a de forme conique.

Enfin, on précisera que les empreintes 10 et 10a comportent une protubérance annulaire 12 entourant l'entrée de leur cavité.

Grâce à cette protubérance, la pâte déversée dans les cavités 7 ne peut pas se répandre accidentellement sur la face supérieure du plateau 6 et les lignes de jonction entre les plots 3 et l'élément plat 1 sont parfaitement régulières.

Comme les empreintes sont en matière souple, leur protubérance peuvent en effet s'escamoter de façon à ne plus faire saillie sur la face supérieure du plateau lorsque l'élément plat est appliqué contre ce dernier préalablement à l'introduction de la pâte dans les cavités 7.

## Revendications

1. Procédé de fabrication d'un dispositif de signalisation au sol, notamment pour déficients visuels, comprenant un élément plat (1) dont la face inférieure est destinée à être fixée sur le sol et dont la face supérieure est pourvue de plots de signalisation (3) formés à partir d'une pâte apte à durcir en présence d'air, et après durcissement de la pâte séparer l'élément plat (1) du plateau de moulage (6) **caractérisé en ce qu'**il comprend les étapes consistant à :
- réaliser dans l'élément plat (1) des orifices (4) dont la répartition correspond à celle des plots (3) mais dont les dimensions sont inférieures à celles de la surface de ces derniers qui surplombe l'élément plat ;
- appliquer la face supérieure de l'élément plat (1) contre un plateau de moulage horizontal (6) comportant des cavités (7) dont la répartition, les dimensions et la configuration correspondent à celles des plots (3) ;
- introduire à travers les orifices (4), dans les cavités (7) du plateau de moulage (6), une quantité de pâte suffisante pour remplir lesdites cavités ainsi que lesdits orifices , et

2. Procédé selon la revendication 1, **caractérisé en ce qu'**il consiste à appliquer un film amovible (2) sur la face inférieure de l'élément plat (1) et à réaliser des orifices (5) dans le film amovible, en même temps que les orifices (4) réalisés dans l'élément plat (1).

3. Procédé selon la revendication 1 ou 2, **caractérisé en ce que** les orifices (4, 5) ont une surface approximativement égale à la moitié de la surface des plots (3) qui surplombe l'élément plat (1).

4. Procédé selon l'une quelconque des revendications précédentes, **caractérisé en ce que** les orifices (4, 5) réalisés dans l'élément plat (1) et dans le film amovible (2), lorsque celui-ci est présent, ont une forme générale de losange.

5. Procédé selon l'une quelconque des revendications 1 à 4, **caractérisé en ce que** les plots (3) ont une forme choisie dans le groupe comprenant les formes sphérique, pyramidale, conique, tronconique et cylindrique.

6. Procédé selon l'une quelconque des revendications précédentes, **caractérisé en ce que** la pâte est une résine polymérisable en présence d'air.

7. Procédé selon l'une quelconque des revendications précédentes, **caractérisé en ce que** l'élément plat (1) et les plots (3) ont des couleurs différentes.

8. Plateau de moulage utilisé dans la mise en oeuvre du procédé selon l'une quelconque des revendications précédentes, **caractérisé en ce qu'**il comprend des trous borgnes (8) dont la répartition correspond à celle des plots (3), chacun des trous borgnes recevant une bague (9) dans laquelle est disposée une empreinte (10 ; 10a) délimitant une cavité (11 ; 11 a) dont la forme et les dimensions correspondent à celles de la partie d'un plot (3) faisant saillie sur l'élément plat (1), les empreintes (10 : 10a) comportant une protubérance annulaire (12) entourant l'entrée de leur cavité (11 ; 11a), cette protubérance faisant saillie sur la surface externe du plateau (1).

## Claims

1. A method of manufacture of a road marking device, in particular for the visually impaired, including a flat element (1) whereof the lower face is intended for being attached to the ground and whereof the upper face is provided with marking road studs (3) formed of a paste capable of hardening when exposed to air and, once the paste has hardened, separating the flat element (1) from the moulding plate, **characterised in that** it includes the steps consisting in :
- forming in the flat element (1) orifices (4) whereof the distribution matches that of the road studs (3) but whereof the dimensions are smaller than those of the surface of the latter overhanging above the flat element;
- applying the upper face of the flat element (1) against a horizontal moulding plate (6) containing cavities (7) whereof the distribution, the dimensions and the configuration match those of the road studs (3); and
- inserting through the orifices (4), in the cavities (7) of the moulding plate (6), sufficient amount of paste for filling up said cavities as well as said orifices.

2. A method according to claim 1, **characterised in that** it consists in applying a detachable film (2) on the lower face of the flat element (1) and in providing orifices (5) in the detachable film, at the same time as the orifices (4) realised in the flat element (1).

3. A method according to claim 1 or 2, **characterised in that** the orifices (4, 5) have a surface approximately equal to half the surface of the road studs (3) overhanging above the flat element (1).

4. A method according to any of the previous claims, **characterised in that** the orifices (4, 5) realised in the flat element (1) and in the detachable film (2), if at all available, have generally rhombus-shaped.

5. A method according to any of the claims 1 to 4, **characterised in that** the road studs (3) have a shape selected among the group including the spherical, pyramidal, conical, truncated and cylindrical shapes.

6. A method according to any of the previous claims, **characterised in that** the paste is a polymerisable resin when exposed to air.

7. A method according to any of the previous claims, **characterised in that** the flat element (1) and the road studs (3) have different colours.

8. A moulding plate used in the implementation of the method according to any of the previous claims, **characterised in that** it includes blind holes (8) whereof the distribution matches that of the road studs (3), each of the blind holes receiving a ring (9) wherein is arranged a nest (10 ; 10a) delineating a cavity (11 ; 11 a) whereof the shape and the dimensions match those of the portion of a road stud (3) protruding on the flat element (1), the nests (10 : 10a) comprising an annular protrusion (12) surrounding the inlet of their cavity (11 : 11a), this protrusion protruding on the external surface of the plate (1).

## Patentansprüche

1. Verfahren zur Herstellung einer Straßenmarkierungsvorrichtung, insbesondere für optische Mängel, die ein flaches Element (1) umfasst, dessen Innenseite dazu gedacht ist, auf dem Boden fixiert zu werden und dessen obere Fläche mit Markierungskontakten (3) versehen ist, die aus einer Paste hergestellt sind, die in Gegenwart von Luft härten kann, und wobei nach Härtung der Paste das flache Element (1) von einer Formplatte (6) getrennt wird, **dadurch gekennzeichnet, dass** das Verfahren die folgenden Schritte umfasst:
- Herstellen von Öffnungen (4) in dem flachen Element (1), deren Verteilung der der Kontakte (3) entspricht, deren Abmessungen jedoch kleiner als die der Oberfläche der letzteren, die das flache Element überragen, sind;
- Aufbringen der oberen Fläche des flachen Elements (1) auf eine horizontale Formplatte (6), die Aushöhlungen (7) umfasst, deren Verteilung, Abmessungen und Konfiguration denen der Kontakte (3) entsprechen;
- Einführen einer Pastenmenge durch die Öffnungen (4) in die Aushöhlungen (7) der Formplatte (6), die dazu ausreicht, die Aushöhlungen sowie die Öffnungen auszufüllen.

2. Verfahren nach Anspruch 1, **dadurch gekennzeichnet, dass** es das Aufbringen einer ablösbaren Folie (2) auf der Innenfläche des flachen Elements (1) und das Herstellen von Öffnungen (5) in der ablösbaren Folie, zur gleichen Zeit, wie die Öffnungen (4) in dem flachen Element (1) hergestellt werden, umfasst.

3. Verfahren nach Anspruch 1 oder 2, **dadurch gekennzeichnet, dass** die Öffnungen (4, 5) eine Oberfläche aufweisen, die der Hälfte der Oberfläche der Kontakte (3), die das flache Element (1) überragen, ungefähr gleicht.

4. Verfahren nach einem der vorhergehenden Ansprüche, **dadurch gekennzeichnet, dass** die Öffnungen (4, 5), die in dem flachen Element (1) und in der ablösbaren Folie (2), wenn diese vorliegt, hergestellt sind, eine allgemeine Rautenform aufweisen.

5. Verfahren nach einem der Ansprüche 1 bis 4, **dadurch gekennzeichnet, dass** die Kontakte (3) eine Form aufweisen, die aus der Gruppe bestehend aus den Formen kugelförmig, pyramidenförmig, kegelförmig, kegelstumpfförmig und zylinderförmig ausgewählt ist.

6. Verfahren nach einem der vorhergehenden Ansprüche, **dadurch gekennzeichnet, dass** es sich bei der Paste um ein in Gegenwart von Luft polymerisierbares Harz handelt.

7. Verfahren nach einem der vorhergehenden Ansprüche, **dadurch gekennzeichnet, dass** das flache Element (1) und die Kontakte (3) unterschiedliche Farben aufweisen.

8. Formplatte, die bei der Durchführung des Verfahrens nach einem der vorhergehenden Ansprüche verwendet wird, **dadurch gekennzeichnet, dass** sie Grundbohrungen (8) umfasst, deren Verteilung der der Kontakte (3) entspricht, wobei jede der Grundbohrungen eine Buchse (9) aufnimmt, in der eine Vertiefung (10; 10a) angeordnet ist, die eine Aushöhlung (11; 11a) begrenzt, deren Form und Abmessungen denen des Teils eines Kontakts (3), der von dem flachen Element (1) hervorragt, entsprechen, wobei die Vertiefungen (10; 10a) eine ringförmige Protuberanz (12) umfassen die den Eintritt ihrer Aushöhlung (11: 11a) umgibt wobei diese Protuberanz von der Außenfläche der Platte (1) hervorragt.
